# EUROPÄISCHE PATENTSCHRIFT

(11) **EP 1 292 807 B1**
(45) Veröffentlichungstag und Bekanntmachung des Hinweises auf die Patenterteilung: **23.01.2008**
(21) Anmeldenummer: 01956263.6
(22) Anmeldetag: 08.06.2001
(51) Int. Cl.: G01C 21/26

(54) **VERFAHREN ZUR BENUTZERBEZOGENEN EINSTELLUNG EINES FAHRER-INFORMATIONSSYSTEMS**
METHOD FOR ADJUSTING A DRIVER INFORMATION SYSTEM ACCORDING TO THE USER
PROCEDE DE REGLAGE SPECIFIQUE A L'UTILISATEUR D'UN SYSTEME D'INFORMATIONS CONDUCTEUR

(30) Priorität: 08.06.2000 DE 10028457
(43) Veröffentlichungstag der Anmeldung: 19.03.2003
(73) Patentinhaber: ROBERT BOSCH GMBH, 70442 Stuttgart (DE)
(72) Erfinder: HESSLING, Matthias, 31141 Hildesheim (DE); PETZOLD, Bernd, 31234 Edemissen (DE); HAHLWEG, Cornelius, 22147 Hamburg (DE); DRAEGER, Gerd, 38102 Braunschweig (DE); KERSKEN, Ulrich, 31199 Diekholzen (DE)
(86) Internationale Anmeldenummer: PCT/DE2001/002122
(87) Internationale Veröffentlichungsnummer: WO 2001/094888

(56) Entgegenhaltungen:
- EP-A- 0 704 675
- DE-A- 4 211 556
- DE-A- 19 839 378
- JP-A- 10 026 538
- PATENT ABSTRACTS OF JAPAN vol. 1999, no. 03, 31. März 1999 (1999-03-31) & JP 10 318771 A (CASIO COMPUT CO LTD), 4. Dezember 1998 (1998-12-04)

## Beschreibung

Die Erfindung betrifft ein Verfahren zur benutzerbezogenen Einstellung eines Fahrer-Informationssystems, in welchem Informationen gespeichert werden und zum Treffen einer Entscheidung heranziehbar sind, gemäß Oberbegriff des Anspruchs 1.

### Stand der Technik

Verfahren der eingangs genannten Art sind bekannt. Sie werden insbesondere zur Einstellung von Navigations- und Telematiksystemen herangezogen. Dabei erfolgt die Einstellung derartiger Systeme durch den Fahrzeugbenutzer selbst mittels Handeingabe an einem entsprechenden Gerät beziehungsweise mittels Parametrisierung allgemein gültiger Erfahrungswerte. Nachteilhafterweise werden in verschiedenen Betriebssituationen mittels derartiger Informationssysteme entsprechende Entscheidungen vom Fahrzeugbenutzer wiederholt abgefragt oder nicht korrekt durch die Informationssysteme getroffen.

Aus der DE 198 39 378 A1 ist eine automatisierte Eingabe von Fahrzielen und Fahrtrouten in ein Navigationssystem bekannt. Hierbei wird das Mobilitätsverhalten des Benutzers anhand verschiedener Merkmale aufgezeichnet und aus diesen Daten werden typische Bewegungsprofile extrahiert und den Fahrzielen nebst zugehörigen Fahrtrouten zugeordnet. Die Navigationsvorrichtung verfügt über eine spezielle Speichereinheit, die die Abspeicherung von bisherigen Fahrzielen und/oder Fahrtrouten ermöglicht, wobei diese Informationen mit verschiedenen Merkmalen im Speicher in einer Liste verknüpft sind. Optional kann im Speicher zusätzlich das Alter der Informationen abgelegt sein, wobei zusätzlich ein Zeitfenster, das durch den Benutzer bestimmt sein kann, gespeichert ist. Veraltete Informationen können dann gelöscht werden. Die gespeicherten, automatisch erfassten Fahrtroutendaten dienen also dazu, dem Fahrer ein Fahrziel vorzuschlagen, über dessen Auswahl er dann entscheiden kann.

Aus der JP 10-026 538 ist ein Navigationssystem bekannt, das persönliche Daten eines Benutzers auch dann schützen kann, wenn das Gerät von mehreren Personen benutzt wird. Die persönlichen, gespeicherten Daten eines Benutzers sind nur dann zugänglich, wenn ein entsprechendes Passwort eingegeben wird.

### Vorteile der Erfindung

Das erfindungsgemäße Verfahren ist dadurch gekennzeichnet, dass eine benutzerbezogene Entscheidungsmatrix erstellt wird, welche in Abhängigkeit von Betriebsinformationen anpassbar und zum Treffen einer Vorentscheidung mittels des Informationssystems heranziehbar ist. Hierbei werden unter Betriebsinformationen alle Fahrzeug-, Betriebs- und/oder benutzerrelevanten Informationen verstanden, die zum Treffen einer Vorentscheidung mittels des Informationssystems von Bedeutung sein können. Da die Entscheidungsmatrix benutzerbezogene Informationen beziehungsweise Daten enthält, kann sie zum Treffen einer benutzerspezifischen Vorentscheidung genutzt werden. Bei einer Vorentscheidung handelt es sich dabei um eine Voraussage des Informationssystems hinsichtlich eines mit hoher Wahrscheinlichkeit eintretenden, individuellen Verhaltens eines Fahrzeugbenutzers bei einer jeweiligen Betriebs- beziehungsweise Verkehrssituation. Aufgrund der ständigen Anpassung der benutzerbezogenen Entscheidungsmatrix ist die Wahrscheinlichkeit, dass eine getroffene Vorentscheidung beziehungsweise Voraussage tatsächlich zutrifft, verhältnismäßig hoch.

Mit Vorteil arbeitet das Fahrer-Informationssystem als Navigationssystem. Da ein Navigationssystem verhältnismäßig oft von einem Fahrzeugbenutzer Vorentscheidungen abverlangt beziehungsweise selbst Vorentscheidungen treffen muss, ist eine benutzerspezifisch angepasste Entscheidungsmatrix besonders zur Integration in einem Navigationssystem geeignet, da selbiges in dieser Weise Vorentscheidungen treffen kann, ohne dass der Benutzer des Fahrzeugs hinsichtlich dieser Vorentscheidungen aktiv werden muss. Der Benutzer des Fahrzeugs wird somit weniger, insbesondere während des Fahrbetriebs, von seiner Umgebung abgelenkt.

Vorteilhafterweise erfolgt die Einstellung des Fahrer-Informationssystems in Form einer Voreinstellung. Um eine benutzerbezogene Voreinstellung eines Fahrer-Informationssystems zu erhalten, werden Vorentscheidungen auf der Grundlage von Betriebsinformationen "erlernt". Zum Treffen von Vorentscheidungen mittels des Informationssystems wird auf die ständig angepasste, benutzerbezogene Entscheidungsmatrix zurückgegriffen. Es werden somit Betriebsinformationen des vergangenen Fahrverhaltens des Fahrzeugbenutzers zur Voreinstellung des Fahrer-Informationssystems genutzt, um. Vorentscheidungen treffen zu können, welche mit hoher Wahrscheinlichkeit in einer entsprechenden Betriebssituation mit demselben Fahrzeugbenutzer in Zukunft eintreten werden.

Gemäß einer bevorzugten Ausführungsvariante wird die Entscheidungsmatrix unter Heranziehung von ermittelten, situationsabhängigen und entscheidungsrelevanzen Betriebsinformationen des Fahrzeugs angepasst. In dieser Weise erfolgt ständig ein Vergleich zwischen den bereits in der Entscheidungsmatrix gespeicherten Daten, die auf vergangene Betriebsinformationen zurückgehen, und später ermittelten, aktuellen Betriebsinformationen des Fahrzeugs. Hierdurch kann die Entscheidungsmatrix in kontrollierter Weise laufend angepasst werden.

Mit Vorteil wird zur Erstellung der Entscheidungsmatrix zwischen in Bezug auf das jeweilige Benutzerverhalten stabilen und zufälligen Betriebsinformationen unterschieden. Dabei werden unter stabilen Betriebsinformationen solche Informationen verstanden, die aufgrund ihres wiederholten Auftretens als Grundlage zum zuverlässigen Treffen einer benutzerbezogenen Vorentscheidung heranziehbar sind. Hierbei kann bei der Unterscheidung zwischen stabilen und zufälligen Betriebsinformationen auch auf die bereits in der Entscheidungsmatrix gespeicherten Daten zurückgegriffen werden. Ferner werden unter zufälligen Betriebsinformationen solche Informationen verstanden, die lediglich einmalig oder wenigstens selten auftreten und somit nicht als Basis zum Treffen von Vorentscheidungen heranziehbar sind, mittels welchen mit verhältnismäßig hoher Wahrscheinlichkeit entsprechende, zukünftige Betriebssituationen vorausgesagt werden können. Eine Unterscheidung zwischen stabilen und zufälligen Betriebsinformationen ermöglicht somit eine kontrollierte und informationsbereinigte Aktualisierung der Entscheidungsmatrix für den jeweiligen Fahrzeugbenutzer.

Vorteilhafterweise kooperiert die Entscheidungsmatrix mit einem benutzerspezifischen, permanenten Speicher, welcher vor weiteren, externen Zugriffen geschützt ist. Im permanenten Speicher können stabile Daten beziehungsweise Betriebsinformationen, welche zur Erstellung der Entscheidungsmatrix benötigt werden, sowie zufällige Betriebsinformationen gespeichert werden. Somit kann auch eine Unterteilung der Betriebsinformationen in stabile und zufällige Informationen durch Vergleich mit den im permanenten Speicher gespeicherten Daten erfolgen. In der Entscheidungsmatrix sind dagegen auf stabilen Betriebsinformationen basierende Entscheidungen gespeichert, wobei auch zwischen den jeweiligen Fahrzeugbenutzern unterschieden werden kann. Der permanente Speicher ist vor weiteren, externen Zugriffen -beispielsweise, mittels des Fahrzeugbenutzers- geschützt, um keine unerwünschten, manuellen Änderungen beziehungsweise Verfälschungen der gespeicherten Daten durch eine Person zu erlauben. Ferner sind die benutzerbezogenen Daten im permanenten Speicher hinsichtlich der zu gewährleistenden "Privacy" (Datenschutz) zu sichern.

Vorzugsweise wird bei einer nicht treffbaren Vorentscheidung mittels des Fahrer-Informationssystems ein Vorschlag an den Benutzer des Fahrzeugs unterbreitet. Für den Fall, dass keine Vorentscheidung aufgrund mangelnder Informationen der Entscheidungsmatrix vcm Fahrer-Informationssystem getroffen werden kann, wird vorzugsweise ein Vorschlag an den Benutzer des Fahrzeugs unterbreitet, welcher von selbigem bestätigt oder abgelehnt werden kann. Das Fahrer-Informationssystem kann zum Unterbreiten eines Vorschlags auf gespeicherte Daten zurückgreifen, wobei diese Daten nicht notwendigerweise benutzerbezogen sein müssen, da gegebenenfalls noch keine entsprechenden Daten vorliegen. Dabei ist es ferner möglich, auch die entsprechenden Daten eines Vorschlags zur Erstellung beziehungsweise Aktualisierung der Entscheidungsmatrix heranzuziehen.

Gemäß Erfindung wird ein Vergleich zwischen der Vorentscheidung, beziehungsweise dem Vorschlag, und einem späteren, tatsächlich erfolgenden Benutzerverhalten durchgeführt und zur Erstellung beziehungsweise Anpassung der benutzerbezogenen Entscheidungsmatrix herangezogen. Mittels eines derartigen Vergleichs ist es in zuverlässiger und effektiver Weise möglich, eine Rückkopplung durchzuführen, mittels welcher unter Berücksichtigung des in Bezug auf die Vorentscheidung beziehungsweise den Vorschlag eintretenden, späteren Benutzerverhaltens (Fahrverhalten, Bestätigung oder Ablehnung des Vorschlags) eine adaptive Aktualisierung einer bestehenden, persönlichen Entscheidungsmatrix beziehungsweise die Erstellung einer neuen Entscheidungsmatrix erfolgen kann.

Vorzugsweise werden die Vorentscheidung beziehungsweise der Vorschlag mittels einer Anzeigeeinheit angezeigt und gegebenenfalls durch den Benutzer des Fahrzeugs bestätigt, verändert oder abgelehnt. Durch die Möglichkeit für den Fahrzeugbenutzer, aktiv eine Vorentscheidung beziehungsweise einen Vorschlag zu bestätigen, verändern oder abzulehnen, kann ein noch nicht vom Fahrer-Informationssystem erlerntes beziehungsweise neues Benutzerverhalten in effektiver und schneller Weise im Fahrer-Informationssystem ergänzt werden. Eine Anpassung der Entscheidungsmatrix kann allerdings erst dann erfolgen, wenn das tatsächlich später erfolgende Verhalten des Fahrzeugbenutzers die entsprechende Voraussage beziehungsweise die Änderung bestätigt.

Vorteilhafterweise werden benutzerspezifische Informationen und/oder Betriebsdaten mittels einer tragbaren und vorzugsweise programmierbaren Speichereinheit in eine adaptive Einheit des Fahrer-Informationssystems eingegeben. Eine derartige Speichereinheit kann beispielsweise eine sogenannte "SmartCard" oder ein Handcomputer sein, welche gespeicherte, benutzerspezifische Informationen beziehungsweise Betriebsdaten enthalten, die zum Treffen einer Vorentscheidung beziehungsweise zur Unterbreitung eines Vorschlags für den Fahrzeugbenutzer von Bedeutung sein können.

Vorzugsweise findet ein Datenaustausch zwischen der Speichereinheit und dem permanenten Speicher statt. In dieser Weise können benutzerspezifische Informationen beziehungsweise Betriebsdaten sowohl von der Speichereinheit auf den permanenten Speicher als auch von letzterem in die Speichereinheit übertragen werden. Ferner können gegebenenfalls Daten manuell durch den Fahrzeugbenutzer in die Speichereinheit, beispielsweise in Form einer Fahrzielbestimmung, gegebenenfalls vor Antritt der Fahrt eingegeben werden, welche nach Herstellung einer Wirkverbindung zwischen Speichereinheit und adaptiver Einheit bei Fahrtantritt an den permanenten Speicher übermittelt werden.

Mit Vorteil erfolgt vor einem Datenaustausch zwischen der Speichereinheit und dem permanenten Speicher eine benutzerbezogene Sicherheitsabfrage mittels des Fahrer-Informationssystems. Durch eine derartige Sicherheitsabfrage wird gewährleistet, dass benutzerbezogene Informationen nicht unzulässigerweise für Dritte zugänglich sind. Beispielsweise kann eine derartige Sicherheitsabfrage in Form einer Geheimcodeabfrage erfolgen.

Weitere vorteilhafte Ausgestaltungen der Erfindung ergeben sich aus der Beschreibung.

### Zeichnungen

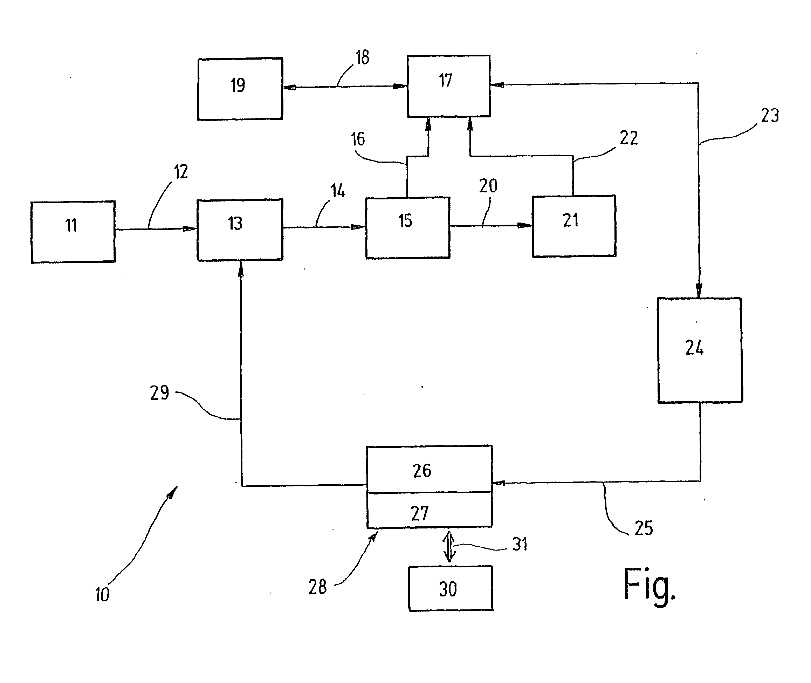

Die Erfindung wird nachfolgend in einem Ausführungsbeispiel anhand einer zugehörigen Zeichnung näher erläutert. Dabei zeigt die einzige Figur ein Blockschaltbild eines erfindungsgemäßen Fahrer-Informationssystems.

### Beschreibung der Erfindung

Das in der Figur dargestellte Blockschaltbild zeigt ein allgemein mit 10 bezeichnetes Fahrer-Informationssystem, beispielsweise ein Navigationssystem eines Fahrzeugs. Das Fahrer-Informationssystem 10 weist eine Informationseinheit 11 auf, mittels welchem Eingangsinformationen vorzugsweise in Form von extrahierten, benutzerbezogenen Betriebsinformationen zur weiteren Verarbeitung im Fahrer-Informationssystem 10 bereitgestellt werden. Die Informationseinheit 11 ist mittels einer als Pfeil 12 dargestellten Datenübertragungsleitung mit einer Verarbeitungseinheit 13 wirkverbunden. Die Verarbeitungseinheit 13 dient zur Situationserfassung und Entscheidungsfindung unter Berücksichtigung der mittels der Informationseinheit 11 übertragenen Eingangsinformationen. Die Verarbeitungseinheit 13 ist ausgangsseitig mittels einer als Pfeil 14 dargestellten Datenübertragungsleitung mit einer Vorentscheidungseinheit 15 und eingangsseitig mittels einer weiteren, als Pfeil 29 dargestellten Datenübertragungsleitung mit einer Entscheidungsmatrix 26 einer adaptiven Einheit 28 wirkverbunden. In der Entscheidungsmatrix 26 sind benutzerbezogene Entscheidungen gespeichert, welche zur Entscheidungsfindung in der Verarbeitungseinheit 13 herangezogen werden. Die Vorentscheidungseinheit 15 ist mittels einer als Pfeil 16 dargestellten Datenübertragungsleitung mit einer Rekonstruktionseinheit 17 wirkverbunden. Die Rekonstruktionseinheit 17 dient dazu, getroffene Vorentscheidungen mit dem später eintretenden, tatsächlichen Benutzerverhalten zu vergleichen und aus diesem Vergleich resultierende Informationen beziehungsweise Daten zur weiteren Verarbeitung bereitzustellen. Es erfolgt somit mittels der Rekonstruktionseinheit 17 eine Verknüpfung eines situationsbezogenen Verhaltens des Fahrzeugbenutzers mit einer entsprechenden Vorentscheidung. Die Rekonstruktionseinheit 17 ist mittels einer als Doppelpfeil 18 dargestellten Datenübertragungsleitung mit einer Anzeigeeinheit 19 wirkverbunden. Die Anzeigeeinheit 19 dient zur Anzeige einer getroffenen Vorentscheidung und weist gegebenenfalls eine aktive Funktionseinheit (nicht dargestellt) auf, mittels welcher der Fahrzeugbenutzer die Vorentscheidung bestätigen und/oder ändern kann.

Falls die Vorentscheidungseinheit 15 aufgrund fehlender Informationen der Entscheidungsmatrix 26 keine Vorentscheidung treffen kann, wird mittels des Fahrer-Informationssystems 10 dem Fahrzeugbenutzer ein Vorschlag unterbreitet. Hierzu ist die Vorentscheidungseinheit 15 mittels einer als Pfeil 20 dargestellten Datenübertragungsleitung mit einer Vorschlagseinheit 21 wirkverbunden, welche unter Berücksichtigung von benutzerspezifischen und gegebenenfalls auch allgemein gültigen Daten einen geeigneten Vorschlag entwickelt. Die Vorschlagseinheit 21 ist mittels einer als Pfeil 22 dargestellten Datenübertragungsleitung mit der Rekonstruktionseinheit 17 verbunden, welche die Informationen eines jeweiligen Vorschlags mit dem späteren, tatsächlichen Benutzerverhalten vergleicht und entsprechende Daten zur Weiterverarbeitung im Fahrer-Informationssystem 10 bereitstellt. Der jeweilige Vorschlag wird vorher in der Anzeigeeinheit 19 angezeigt, so dass der Fahrzeugbenutzer mittels der Funktionseinheit den Vorschlag bestätigen, ändern und/oder ablehnen kann.

Die Rekonstruktionseinheit 17 ist mittels einer als Doppelpfeil 23 dargestellten Datenübertragungsleitung mit einer Rückkopplungseinheit 24 wirkverbunden. Die Rückkopplungseinheit 24 dient zur adaptiven Aktualisierung und somit zur Ergänzung beziehungsweise zur Anpassung der Entscheidungsmatrix 26 der adaptiven Einheit 28. Hierzu ist die Rückkopplungseinheit 24 mittels einer als Pfeil 25 dargestellten Datenübertragungsleitung mit der Entscheidungsmatrix 26 wirkverbunden. Die adaptive Einheit 28 weist außer der Entscheidungsmatrix 26 einen permanenten Speicher 27 auf, auf welchen von außen, beispielsweise durch den Fahrzeugbenutzer, nicht zugegriffen werden kann. Der permanente Speicher 27 enthält entscheidungsrelevante und insbesondere ermittelte, situationsabhängige Betriebsinformationen und steht zur Erstellung beziehungsweise Anpassung der benutzerbezogenen Entscheidungsmatrix 26 mit selbiger in operativem Wirkkontakt.

Die Datenübertragungsleitungen gemäß den Pfeilen 12, 14, 16, 18, 20, 22, 23, 25 und 29 können auch Datenübertragungsfunktionen in Form einer Software sein.

Bei der adaptiven Aktualisierung der.Entscheidungsmatrix 26 mittels der Rückkopplungseinheit 24 wird zwischen in Bezug auf das jeweilige Benutzerverhalten stabilen und zufälligen Betriebsinformationen unterschieden. Sowohl die stabilen als auch die zufälligen Betriebsinformationen werden in dem permanenten Speicher 27 gespeichert, so dass mittels eines ständigen Vergleichs von neuen Betriebsinformationen mit den gespeicherten Daten im permanenten Speicher 27 eine Unterscheidung zwischen stabilen und zufälligen Betriebsinformationen möglich ist. Die stabilen Betriebsinformationen werden zur Erstellung beziehungsweise Ergänzung der Entscheidungsmatrix 26 herangezogen, während die zufälligen Betriebsinformationen gegebenenfalls zur Erarbeitung eines Vorschlags mittels der Vorschlagseinheit 21 genutzt werden können.

Eine tragbare und vorzugsweise programmierbare Speichereinheit 30 kann zum Eingeben von benutzerspezifischen Informationen und/oder Betriebsdaten in die adaptive Einheit 28 mit selbiger gemäß Doppelpfeil 31 wirkverbunden werden. Die Speichereinheit 30 ist vorzugsweise als sogenannte "SmartCard" oder als Handcomputer ausgebildet. Dabei kann ein Datenaustausch zwischen der Speichereinheit 30 und dem permanenten Speicher 27 stattfinden. Es werden somit Daten von der Speichereinheit 30 in den permanenten Speicher 27 und/oder von selbigem in die Speichereinheit 30 übertragen. Vor einem Datenaustausch zwischen der Speichereinheit 30 und dem permanenten Speicher 27 erfolgt eine benutzerbezogene Sicherheitsabfrage mittels des Fahrer-Informationssystems 10. Es ist allerdings auch möglich, den permanenten Speicher 27 zur benutzerbezogenen Einstellung des Fahrer-Informationssystems 10 zu nutzen, ohne notwendigerweise auf Daten der Speichereinheit 30 zurückgreifen zu müssen.

Der Fahrzeugbenutzer kann beispielsweise mittels einer SmartCard (tragbare Speichereinheit 30) benutzerspezifische Daten in die adaptive Einheit 28 eingeben und anschließend zum Beispiel zur Berechnung der Fahrzeit sein jeweiliges Fahrziel eingeben. Unter Ausnutzung der benutzerbezogenen Entscheidungsmatrix 26 erstellt die Verarbeitungseinheit 13 ein Geschwindigkeitsprofil, um eine möglichst genaue Prognose hinsichtlich der gefragten Fahrzeit zu berechnen. Die Vorentscheidungseinheit 15 trifft eine entsprechende Vorentscheidung hinsichtlich der Fahrzeit und gibt selbige an die Rekonstruktionseinheit 17 weiter, welche eine entsprechende Information an die Anzeigeeinheit 19 überträgt. Der Fahrzeugbenutzer entnimmt somit aus der Anzeigeeinheit 19, welche Fahrzeit er höchstwahrscheinlich benötigt, um unter Berücksichtigung seines herangezogenen Geschwindigkeitsprofils zum Fahrziel zu gelangen. Nach Beendigung der Fahrt wird in der Rekonstruktionseinheit 17 ein Vergleich zwischen Vorentscheidung und tatsächlicher Fahrzeit (tatsächliches Geschwindigkeitsprofil) durchgeführt und entsprechende Informationen zur Rückkopplungseinheit 24 weitergegeben. Die Rückkopplungseinheit 24 übermittelt entsprechende Daten an die Entscheidungsmatrix 26, welche unter Berücksichtigung der im permanenten Speicher gespeicherten Daten beziehungsweise Informationen (stabil oder zufällig) derart angepasst wird, dass gegebenenfalls ein neues, aktuelles und benutzerbezogenes Geschwindigkeitsprofil abgespeichert wird. Aufgrund der Unterscheidung zwischen stabilen und zufälligen Informationen wird vermieden, dass ein zufälliges, seltenes Geschwindigkeitsprofil in der Entscheidungsmatrix 26 abgespeichert wird, da selbige funktionsgemäß lediglich stabile Informationen enthalten soll. In entsprechender Weise, jedoch nicht unter Heranziehung der Entscheidungsmatrix 26, wird ein Vorschlag mittels des Fahrer-Informationssystems 10 entwickelt und gegebenenfalls zur Ergänzung der Entscheidungsmatrix 26 weiterverarbeitet.

Außer des benutzerspezifischen Geschwindigkeitsprofils können beispielsweise folgende Entscheidungskriterien zur Anpassung mittels des Fahrer-Informationssystems 10 herangezogen werden: Bevorzugter Straßentyp (zum Beispiel Autobahn oder Landstraße), bevorzugte Reihenfolge bestimmter Menüoptionen, bevorzugte "WEB-Links" (Homepage) in Anlehnung an verfügbare Internetdienste oder andere Entscheidungskriterien, bei denen das Vorhersagen des Benutzerverhaltens eine Vereinfachung der Bedienung des Fahrzeugs für den Benutzer darstellt.

Vorteilhafterweise werden durch Einsatz des Fahrer-Informationssystems 10 fahrzeugbenutzerbezogene Entscheidungen vorhersagbar, ohne dabei private Kenntnisse über den jeweiligen Fahrzeugbenutzer für Dritte zugänglich zu machen. Es wird eine stark erleichterte Benutzerführung, beispielsweise mittels einer sogenannten "Human Maschine Inter-face" (HMI) ermöglicht. Es werden dem Fahrzeugbenutzer Entscheidungen abgenommen, so dass selbiger sich besser auf seine Umgebung konzentrieren kann unter Erhöhung der Fahrsicherheit.

## Patentansprüche

1. Verfahren zur benutzerbezogenen Einstellung eines Fahrer-Informationssystems, in welchem Informationen gespeichert werden und zum Treffen einer Entscheidung heranziehbar sind, wobei eine benutzerbezogene Entscheidungsmatrix (26) erstellt wird, welche in Abhängigkeit von Betriebsinformationen anpassbar und zum Treffen einer Vorentscheidung mittels des Informationssystems (10) heranziehbar ist, **dadurch gekennzeichnet, dass** ein Vergleich zwischen der Vorentscheidung und einem späteren, tatsächlich erfolgenden Benutzerverhalten durchgeführt und zur Anpassung der benutzerbezogenen Entscheidungsmatrix (26) herangezogen wird.

2. Verfahren nach Anspruch 1, **dadurch gekennzeichnet, dass** das Fahrer-Informationssystem (10) als Navigationssystem arbeitet.

3. Verfahren nach einem der vorhergehenden Ansprüche, **dadurch gekennzeichnet, dass** die Einstellung des Fahrer-Informationssystems (10) in Form einer Voreinstellung erfolgt.

4. Verfahren nach einem der vorhergehenden Ansprüche, **dadurch gekennzeichnet, dass** die Entscheidungsmatrix (26) unter Heranziehung von ermittelten, situationsabhängigen und entscheidungsrelevanten Betriebsinformationen des Fahrzeugs angepasst wird.

5. Verfahren nach einem der vorhergehenden Ansprüche, **dadurch gekennzeichnet, dass** zur Erstellung der Entscheidungsmatrix (26) zwischen in Bezug auf das jeweilige Benutzerverhalten stabilen und zufälligen Betriebsinformationen unterschieden wird.

6. Verfahren nach einem der vorhergehenden Ansprüche, **dadurch gekennzeichnet, dass** die Entscheidungsmatrix (26) mit einem benutzerspezifischen, permanenten Speicher (27) kooperiert, welcher vor weiteren, externen Zugriffen geschützt ist.

7. Verfahren nach einem der vorhergehenden Ansprüche, **dadurch gekennzeichnet, dass** bei einer nicht treffbaren Vorentscheidung mittels des Fahrer-Informationssystems (10) ein Vorschlag an den Benutzer des Fahrzeugs unterbreitet wird.

8. Verfahren nach einem der vorhergehenden Ansprüche, **dadurch gekennzeichnet, dass** die Vorentscheidung bzw. der Vorschlag mittels einer Anzeigeeinheit (19) angezeigt und gegebenenfalls durch den Benutzer des Fahrzeugs bestätigt, verändert oder abgelehnt werden.

9. Verfahren nach einem der vorhergehenden Ansprüche, **dadurch gekennzeichnet, dass** benutzerspezifische Informationen und/oder Betriebsdaten mittels einer tragbaren und vorzugsweise programmierbaren Speichereinheit (30) in eine adaptive Einheit (28) des Fahrer-Informationssystems (10) eingegeben werden.

10. Verfahren nach einem der vorhergehenden Ansprüche, **dadurch gekennzeichnet, dass** ein Datenaustausch zwischen der Speichereinheit (30) und dem permanenten Speicher (27) stattfindet.

11. Verfahren nach einem der vorhergehenden Ansprüche, **dadurch gekennzeichnet, dass** vor einem Datenaustausch zwischen der Speichereinheit (30) und dem permanenten Speicher (27) eine benutzerbezogene Sicherheitsabfrage mittels des Fahrer-Informationssystems (10) erfolgt.

## Claims

1. Method for the user-related setting of a driver information system, in which information is saved and can be used to make a decision, in which a user related decision matrix (26) is created, which is adaptable depending on operating information and can be used to reach a preliminary decision by means of the information system (10), **characterized in that** a comparison is made between the preliminary decision and later, actually occurring behaviour of the user and is used to adapt the user related decision matrix (26).

2. Method according to Claim 1, **characterized in that** the driver information system (10) operates as a navigation system.

3. Method according to one of the preceding claims, **characterized in that** the driver information system (10) is set in the form of a preset.

4. Method according to one of the preceding claims, **characterized in that** the decision matrix (26) is adapted using determined, situation-dependent and decision-relevant operating information for the vehicle.

5. Method according to one of the preceding claims, **characterized in that**, a distinction is drawn between random operating information and operating information which is stable with respect to the respective user behaviour, in order to create the decision matrix (26).

6. Method according to one of the preceding claims, **characterized in that** the decision matrix (26) cooperates with a user specific, permanent memory (27), which is protected against further external accesses.

7. Method according to one of the preceding claims, **characterized in that**, if no appropriate preliminary decision can be reached, a suggestion is made to the user of the vehicle by means of the driver information system (10).

8. Method according to one of the preceding claims, **characterized in that** the preliminary decision or suggestion is displayed by means of a display unit (19) and can, as required, be confirmed, changed or rejected by the user of the vehicle.

9. Method according to one of the preceding claims, **characterized in that** user-specific information and/or operating data can be entered into an adaptive unit (28) of the driver information system (10) by means of a portable and preferably programmable storage unit (30).

10. Method according to one of the preceding claims, **characterized in that** data is interchanged between the storage unit (30) and the permanent memory (27).

11. Method according to one of the preceding claims, **characterized in that**, prior to data interchange between the storage unit (30) and the permanent memory (27), a user-related security check is carried out by means of the driver information system (10).

## Revendications

1. Procédé pour régler un système d'information du conducteur, rapporté à l'utilisateur, selon lequel on mémorise les informations et on les utilise pour prendre une décision, on établit une matrice de décisions (26) propre à l'utilisateur, adaptable selon les informations de fonctionnement et utilisée pour prendre une pré-décision à l'aide du système d'informations (10),
**caractérisé en ce qu'**
on compare la pré-décision et le comportement effectif ultérieur de l'utilisateur et on utilise la comparaison pour adapter la matrice de décisions (26) propre à l'utilisateur.

2. Procédé selon la revendication 1,
**caractérisé en ce que**
le système d'informations du conducteur (10) est un système de navigation.

3. Procédé selon l'une des revendications précédentes,
**caractérisé en ce que**
le réglage du système d'informations du conducteur (10) se fait sous la forme d'un pré-réglage.

4. Procédé selon l'une des revendications précédentes,
**caractérisé en ce qu'**
on adapte la matrice de décisions (26) en utilisant des informations de fonctionnement du véhicule, déterminées en fonction de la situation et concernant les décisions.

5. Procédé selon l'une des revendications précédentes,
**caractérisé en ce que**
pour établir la matrice de décisions (26), on distingue le comportement stable, respectif de l'utilisateur et les informations de fonctionnement aléatoires.

6. Procédé selon l'une des revendications précédentes,
**caractérisé en ce qu'**
on copie la matrice de décisions (26) avec une mémoire (27) permanente spécifique à l'utilisateur et protégée contre d'autres accès externes.

7. Procédé selon l'une des revendications précédentes,
**caractérisé en ce qu'**
en cas de pré-décision non appropriée, le système d'informations du conducteur (10) soumet une proposition à l'utilisateur du véhicule.

8. Procédé selon l'une des revendications précédentes,
**caractérisé en ce que**
la pré-décision ou la proposition est affichée par une unité d'affichage (19) et, le cas échéant, elle est confirmée, modifiée ou rejetée par l'utilisateur du véhicule.

9. Procédé selon l'une des revendications précédentes,
**caractérisé en ce que**
les informations spécifiques à l'utilisateur et/ou les données de fonctionnement sont introduites à l'aide d'une unité de mémoire (30), portable et de préférence programmable dans une unité adaptative (28) du système d'informations du conducteur (10).

10. Procédé selon l'une des revendications précédentes,
**caractérisé par**
un échange de données entre l'unité de mémoire (30) et la mémoire permanente (27).

11. Procédé selon l'une des revendications précédentes,
**caractérisé par**
une requête de sécurité relative à l'utilisateur par le système d'informations du conducteur (10) avant un échange de données entre l'unité de mémoire (30) et la mémoire permanente (27).
